# EUROPÄISCHE PATENTSCHRIFT

(11) **EP 0 954 858 B1**
(45) Veröffentlichungstag und Bekanntmachung des Hinweises auf die Patenterteilung: **07.04.2010**
(21) Anmeldenummer: 97949896.1
(22) Anmeldetag: 08.11.1997
(51) Int. Cl.: G11B 7/0033, G11B 7/24

(54) **GERÄT ZUM LESEN EINES PLATTENFÖRMIGEN OPTISCHEN SPEICHERS**
READING DEVICE FOR A PLATE-LIKE OPTICAL STORAGE MEDIUM
APPAREIL DE LECTURE POUR MEMOIRE OPTIQUE EN FORME DE PLAQUE

(30) Priorität: 23.01.1997 DE 19702245
(43) Veröffentlichungstag der Anmeldung: 10.11.1999
(73) Patentinhaber: ROBERT BOSCH GMBH, 70442 Stuttgart (DE)
(72) Erfinder: WANNKE, Dietmar, D-72768 Reutlingen (DE); BOCHMANN, Harald, D-30419 Hannover (DE); VAHLE, Andreas, D-31139 Hildesheim (DE)
(86) Internationale Anmeldenummer: PCT/DE1997/002616
(87) Internationale Veröffentlichungsnummer: WO 1998/033175

(56) Entgegenhaltungen:
- EP-A- 0 230 069
- EP-A- 0 479 340
- EP-A- 0 666 565
- EP-A- 0 674 308
- WO-A-86/05620
- DE-A- 4 325 818
- GB-A- 2 169 119
- US-A- 4 398 223
- US-A- 4 656 346

## Beschreibung

### Stand der Technik

Die Erfindung geht aus von einem gerät zum lesen eines plattenförmigen, optischen Speichermediums nach der Gattung des unabhängigen Anspruchs.

Aus DE-PS-43 11 683 ist ein plattenförmiger, optischer Speicher bekannt. Diese im allgemeinen als CD (Compact Disc) bezeichneten Speicher beinhalten binäre Informationen, die seriell in einer Aufeinanderfolge von Höhen und Tiefen längs einer spiraligen Spur gespeichert sind. Die CD ist als runde Scheibe ausgebildet, auf der die spiralige Spur von innen nach außen läuft. Zur Abtastung wird die Scheibe in eine kreisförmige Drehbewegung versetzt, wobei zum Erreichen einer konstanten Datenflußdichte die Drehgeschwindigkeit bei einer Abtastung von innen nach außen abnimmt.

Ein CD-Lesegerät ist z. B. aus der DE-OS-42 25 727 bekannt. Zum Auslesen der CD wird die Laserdiode, deren Licht auf der Oberfläche der CD reflektiert wird, radial über die sich mit unterschiedlichen Geschwindigkeiten drehende CD bewegt.

Aus der EP-A-0 666 565 ist ein Lesegerät zu Lesen einer optischen Karte bekannt, das einen optischen Lesekopf mit einer Laserdiode und optischen Linsen zur Fokussierung des Laserstrahls umfaßt. Der optische Lesekopf umfaßt weiterhin einen optischen Sensor zur Detektierung des reflektierten Laserstrahls. Die optische Karte liegt auf einem Abstandsring auf, der eine gewisse Distanz zwischen den Objektivlinsen eines Drehtellers und der optischen Karte gewährleisten. Zur optischen Abtastung der optischen Karte wird der Drehteller mit den Objektivlinsen des Abtastkopfes in Rotation versetzt.

Aus der US 4 656 346 ist optisches System zum Lesen einer optischen Karte im Kreditkartenformat bekannt. Das optische System umfaßt eine Laserlichtquelle, die einen Laserstrahl aussendet, der durch eine Fokussierungsoptik hindurchtritt. Es sind weiterhin Detektoren vorgesehen, die den von der optischen Karte reflektierten Laserstrahl detektieren. Die optische Speicherkarte wird von einer beweglichen Haltevorrichtung gehalten. Die Laserstrahlen werden den Spuren der optischen Speicherkarte nachgeführt, indem die Haltevorrichtung in Längsrichtung der Karte relativ zu den Laserstrahlen bewegt wird.

Der plattenförmige, optische Speicher hat demgegenüber den Vorteil, daß er ein kleines, bequemes Format aufweist, das die Form und Größe einer Normkarte nach ISO 7810 hat. Mit dem optischen Speicher erhält man einen kleinen Wechselspeicher, der preiswert hergestellt werden kann und umempfindlich gegenüber Umwelteinflüssen ist. Damit ist vor allem sein Einsatz in mobilen Geräten, z. B. in einem Kraftfahrzeug, sehr einfach. Besonders vorteilhaft ist, daß trotz der geringen Abbmessungen des Speichers eine große Datenmenge speicherbar ist.

Vorteilhafterweise läßt sich das Speichervolumen durch eine beidseitige Verwendung des Speichers verdoppeln. Die Informationen werden entlang von Spuren, die entweder parallel oder senkrecht zur Kartenlängsachse angeordnet sind, eingeprägt. Dadurch kann die Information ausgelesen werden, ohne daß die Karte im Lesegerät, wie bisher gebräuchliche Speicherplatten, in Rotation vesetzt werden muß.

Die erfindung betrifft ein Lesegerät nach Anspruch 1. Das erfindungsgemäße Lesegerät zum Lesen des plattenförmigen, optischen Speichers im Normkartenformat hat eine geeignete Öffnung zur Aufnahme des optischen Speichers, sowie mindestens eine Laserdiode zum Auslesen der Information. Das Lesegerät benötigt keinen Motor, der den optischen Speicher in Drehbewegung versetzt, und keinen beweglichen Tastkopf mit Laserdiode, der sich radial über das Speichermedium hinwegbewegt. Das Lesegerät hat somit wesentlich weniger Komponenten, da Bewegungen des Speichermediums selbst entfallen.

Durch die in den abhängigen Ansprüchen aufgeführten Maßnahmen sind vorteilhafte Weiterbildungen und Verbesserungen der Im unabhängigen Anspruch angegebenen Lesegeräte möglich.

Das Lesegerät besitzt mindestens eine Laserdiode, deren Licht der Spur des Speichers nachgeführt wird. Es ist von Vorteil, daß für eine sehr schnelle Auslesemöglichkeit ein Laserarray installiert ist, bei dem mehrere Laserdioden gleichzeitig Licht aussenden und Informationen über das Interferenz-Verfahren ermitteln können.

Der Strahl der Laserdiode wird der Spur des Speichers durch eine optische Einrichtung nachgeführt, wobei diese Einrichtung ein elektrooptisches Bauelement ist.

In einer anderen Aussführungsform des Lesegeräts ist eine mechanische Bewegung des Abtastkopfes in der Ebene über der Speicherplatte von Vorteil, um große Ablenkwinkel des Strahls aus der Senkrechten zur Speicheroberfläche zu vermeiden.

### Zeichnung

Es zeigt Figur 1 einen optischen Speicher mit Leseeinheit, Figur 2 zeigt eine Lesegerät mit Laserdiodenarray und Figur 3 zeigt eine Ausführungsform des Lesegeräts.

### Beschreibung des Ausführungsbeispiels

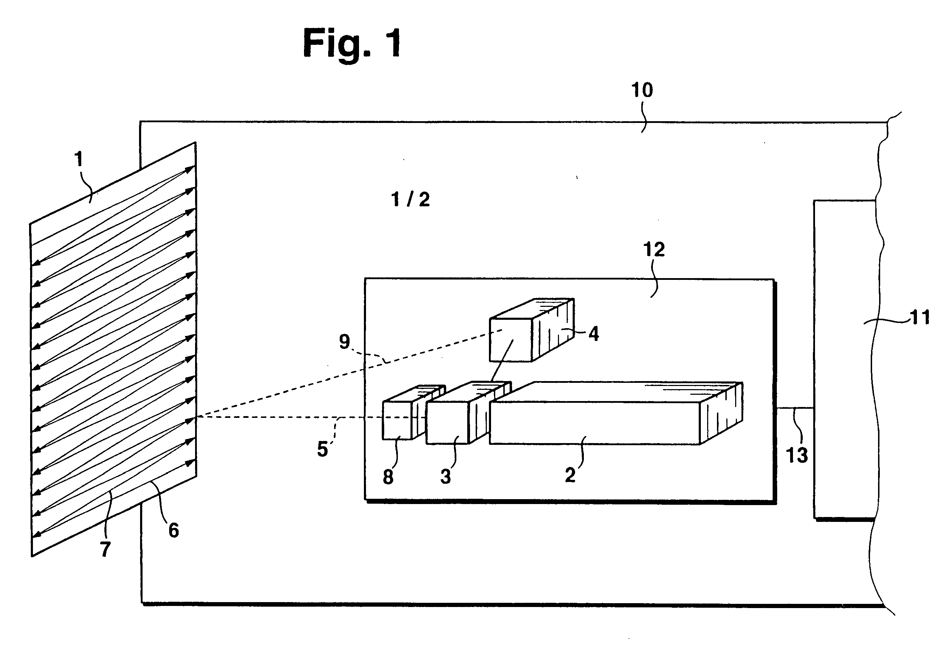

Figur 1 zeigt den plattenförmigen Speicher 1, der das Format und die Größe von Normkarten nach ISO 7810 aufweist. Er ist mit binären Informationen entlang der Spur 6 beschrieben. Das erfindungsgemäße Lesegerät 10 weist einen Abtastkopf 12 mit einem Laser 2, einer Fokussiereinheit 3, einer Ablenkeinheit 8, die mindestens ein elektrooptisches Bauelement beinhaltet, sowie einer Empfangseinheit 4 auf. An den Abtastkopf 12 ist über den Signalausgang 13 der Decoder 11 angeschlossen. Der Laserstrahl 5 wird an der Oberfläche des Speichers 1 in den Strahl 9 reflektiert und auf die Empfangseinheit abgebildet.

Der als Speicherkarte ausgebildete Speicher 1 besitzt eine glatte, optische Bezugsfläche, auf der durch eine Aufeinanderfolge von Höhen und Tiefen digitale Informationen seriell abgespeichert sind. Im Beispiel der Figur 1 sind die Datenspuren 6 senkrecht zur Kartenlängsachse angeordnet. Die Anordnung der Datenzeilen kann auch parallel zur Kartenlängsachse erfolgen. In einem ersten Ausführungsbeispiel wird die Abtastung der Datenzeilen 6 mit einem jeweiligen Absetzen des Laserstrahls 5 am Kartenrand verwirklicht. Der Laserstrahl 5 wird diagonal 7 zwischen Endpunkt der gerade gelesenen Spur und Anfangspunkt der nächsten zu lesenden Spur geführt. Im Zeilenrücklauf 7 werden keine Daten aufgenommen. Es ist auch vorgesehen, daß die Abtastung über eine kontinuierliche Bewegung entlang der Zeilen mit einem Hub in die nächste Zeile erfolgt, ohne daß ein Absetzen des Lesevorgangs notwendig ist. Der Abtastkopf 12 sendet den Laserstrahl 5 aus, der zunächst über die Fokussiereinheit 3 auf die Oberfläche der Speicherplatte fokussiert wird. Um den Strahl der Spur auf der Speicherkarte nachzuführen, wird die Ablenkeinheit 8 vorgeschaltet. Es treten bei der Abtastung einer optischen Karte in der Größe einer Kreditkarte keine allzu großen Ablenkwinkel des Strahls aus der Senkrechten zur Speicheroberfläche auf. Daher können auch andere geeignete optische Bauelemente zur Ablenkung des Laserstrahls oder zur Fokussierung und Ablenkung eingesetzt werden. Der reflektierte Strahl wird im Detektor 4 empfangen und ausgewertet. Das Signal 13 wird dem Dekoder 11 zugeführt, der die digitale Informationen dekodiert und zur weiteren Verarbeitung bereitstellt.

Mit der Speicherkarte lassen sich hohe Speicherdichten mit bis zu 260 MByte erzielen, wenn man von der Speicherdichte der bekannten CD ausgeht. Der Speicher läßt sich für verschiedene transportable Einrichtungen einsetzen.

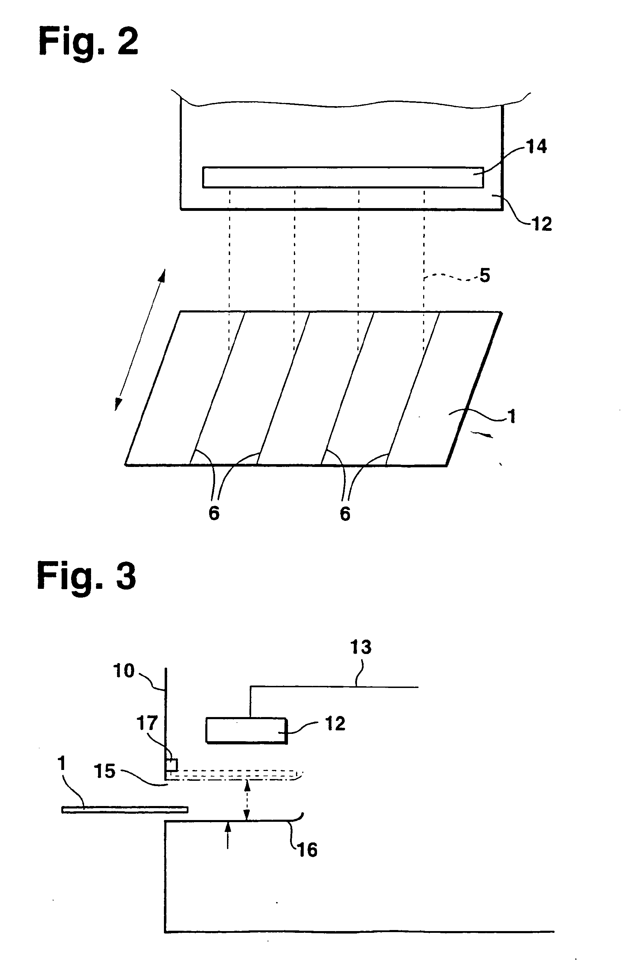

Fig. 2 zeigt die Speicherkarte 1 mit den Spuren 6 der binären Information. Der Abtastkopf 12 enthält ein Laserdiodenarray 14, das Laserstrahlen 5 emittiert. Soll die Zugriffszeit zum Auslesen der erfindungsgemäßen optischen Karte verkleinert werden, ist der Einsatz von mehreren Laserdioden in Form eines Laserdiodenarrays 14 möglich. Jeder Strahl 5 einer Diode wird auf jeweils eine Spur 6 der Karte 1 fokussiert und nur noch entlang dieser Spur in Pfeilrichtung abgelenkt. Damit entfallen Ablenkeinheiten, die den Laserstrahl in großem Winkel und zweidimensional ablenken müssen. Das Auslesen der Information kann dabei auch parallel erfolgen" wenn die Weiterverarbeitung gewärleistet ist.

Sollte die Auswertung der Informationen des Speichers durch die auftretenden spitzen Winkel des Laserstrahls zur Oberfläche verschlechtert werden, kann der Abtastkopf 12 zweidimensional über das kartenförmige Speichermedium zu bewegt werden. Das erfordert allerdings im Lesegerät einen mechanischen Mehraufwand.

Fig. 3 stellt ein Lesegerät 10 für die optische Speicherkarte 1 dar. Sie weist einen Öffnung 15 und einen Aufnahme 16 auf. Am Gehäuse ist der Anschlag 17 installiert. Der Abtastkopf 12 gibt Daten über den Signalausgang 13 aus.

Der Speicher 1 wird in die Öffnung 15 des Lesegeräts eingeführt. Dort muß ein geeigneter Mechanismus die Speicherkarte aufnehmen und fixieren, so daß ein definierter Abstand zwischen Bezugsfläche des Speichers 1 und dem Abtastkopf 12 gewärleistet ist. Dazu können verschiedene, bereits von Chipkarten-Lesegeräten bekannte Ausbildungen verwendet werden. Beispielsweise wird die Speicherkarte 1 von einer Aufnahme 16 im Lesegerät aufgenommen. Diese Aufnahme 16 bewegt sich bis zu einem Anschlag 17 nach oben. In dieser Position ist die Speicherkarte gegenüber dem Abtastkopf fest fixiert. Zur Entnahme der Karte 1 wird die Aufnahme abgesenkt und ein Auswurfmechanismus, wie er auch von Chipkarten-Lesegeräten bekannt ist, verwendet.

## Patentansprüche

1. Lesegerät (10) zum Lesen eines plattenförmigen optischen Speichers (1) mit einer Öffnung (15) zur Aufnahme des Speichers (1), einem Abtastkopf (12), der eine Laserdiode (2) zum Abtasten der optischen Bezugsfläche des Speichers, ein Fokussiermittel (3), das einen ausgesendeten Laserstrahl (5) auf die Oberfläche des Speichers (1) fokussiert, und einen Detektor (4) für den reflektierten Laserstrahl umfasst,
**dadurch gekennzeichnet, dass**
die Öffnung (15) des Lesegerätes (10) zur Aufnahme des Speichers (1) im Kreditkartenformat ausgelegt ist,
dass Mittel zum Festfixieren des Speichers (1) in einer fest definierten Position gegenüber dem Abtastkopf während des Nachführens vorgesehen sind, und dass die optische Ablenkeinrichtung (8) zum Lesen und/oder Schreiben durch Nachführen des ausgesendeten Laserstrahls entlang einer Spur des Speichers (1) angepasst ist,
wobei mindestens ein elektrooptisches Bauelement vorhanden ist, das den Strahl (5) der Laserdiode (2) der Spur (6) des Speichers (1) nachführt.

2. Lesegerät nach Anspruch 1, **dadurch gekennzeichnet, daß** die optische Ablenkeinrichtung (8) den Strahl (5) mindestens einer Laserdiode (2) der Spur (6) des Speichers (1) nachführt.

3. Lesegerät nach einem der Ansprüche 1 bis 3, **dadurch gekennzeichnet, daß** ein Laserdiodenarray (14) eingebaut ist und die optische Ablenkeinrichtung (8) für jeden Strahl (5) eindimensional wirkt.

4. Lesegerät nach einem der Ansprüche 1 bis 4, **dadurch gekennzeichnet, daß** der Abtastkopf (12) eine zweidimensionale Bewegung über die Ebene des Speichers (1) ausführt.

## Claims

1. Reader unit (10) for reading a plate-shaped optical storage medium (1), having an opening (15) for receiving the storage medium (1), a scanning head (12) which comprises a laser diode (2) for scanning the optical reference surfaces of the storage medium, a focusing means (3) which focuses an emitted laser beam (5) onto the surface of the storage medium (1), and a detector (4) for the reflected laser beam, **characterized in that** the opening (15) of the reader unit (10) is designed to receive the storage medium (1) in credit card format, **in that** means are provided for firmly fixing the storage medium (1) in a permanently defined position in relation to the scanning head during tracking, and **in that** the optical deflecting device (8) is adapted for reading and/or writing by tracking the emitted laser beam along a track of the storage medium (1), at least one electro-optical component being present which guides the beam (5) of the laser diode (2) to follow the track (6) of the storage medium (1).

2. A reader unit according to Claim 1, **characterized in that** the optical deflecting device (8) guides the beam (5) of at least one laser diode (2) to follow the track (6) of the storage medium (1).

3. Reader unit according to Claim 1 or 2, **characterized in that** a laser diode array (14) is installed and the optical deflecting device (8) acts in one dimension for each beam (5).

4. Reader unit according to one of Claims 1 to 3, **characterized in that** the scanning head (12) executes a two dimensional movement over the plane of the storage medium (1).

## Revendications

1. Appareil de lecture (10) destiné à lire une mémoire optique (1) en forme de plaque et doté
d'une ouverture (15) de reprise de la mémoire (1), d'une tête de palpage (12) qui comporte une diode laser (2) qui palpe la surface optique de référence de la mémoire, un moyen de focalisation (3) qui focalise sur la surface de la mémoire (1) le faisceau laser (5) émis et un détecteur (4) du faisceau laser réfléchi, **caractérisé en ce que**
l'ouverture (15) de l'appareil de lecture (10) est conçue pour reprendre une mémoire (1) au format d'une carte de crédit,
**en ce que** des moyens d'immobilisation ferme de la mémoire (1) dans une position précisément définie vis-à-vis de la tête de palpage pendant l'exécution sont prévus,
**en ce que** le dispositif (8) de déviation optique de lecture et/ou d'écriture est adapté pour guider le long d'une piste de la mémoire (1) le faisceau laser émis et
**en ce qu'**au moins un composant électro-optique qui guide le faisceau (5) de la diode laser (2) suivant la piste (6) de la mémoire (1) est prévu.

2. Appareil de lecture selon la revendication 1, **caractérisé en ce que** le dispositif (8) de déviation optique guide le faisceau (5) d'au moins une diode laser (2) le long de la piste (6) de la mémoire (1).

3. Appareil de lecture selon l'une des revendications 1 et 2, **caractérisé en ce qu'**il présente une batterie (14) de diodes laser et **en ce que** le dispositif (8) de déviation optique agit en une dimension pour chaque faisceau (5).

4. Appareil de lecture selon l'une des revendications 1 à 3, **caractérisé en ce que** la tête de palpage (12) exécute un déplacement bidimensionnel au-dessus du plan de la mémoire (1).
